Europäisches Patentamt

European Patent Office

Office européen des brevets

(11) Publication number: **0 378 754**
**A2**

## EUROPEAN PATENT APPLICATION

(21) Application number: **89119364.1**

(22) Date of filing: **18.10.89**

(51) Int. Cl.5: **G06F 15/72**

(30) Priority: **19.01.89 US 299362**

(43) Date of publication of application:
**25.07.90 Bulletin 90/30**

(84) Designated Contracting States:
**DE FR IT**

(71) Applicant: **Hewlett-Packard Company**
**3000 Hanover Street**
**Palo Alto California 94304(US)**

(72) Inventor: **Miller, Steven O.**
**14818 NE 78th Street**
**Vancouver Washington 98682(US)**

(74) Representative: **Liesegang, Roland, Dr.-Ing. et al**
**FORRESTER & BOEHMERT**
**Widenmayerstrasse 4**
**D-8000 München 22(DE)**

(54) Polygon smoothing method.

(57) The invented polygon smoothing method includes software which describes a polygon as another polygon with many more vertices than the original. The new polygon is constructed by determining (34) the fineness required to gain acceptable quality in output, and by printing (42) the Bezier cubic curve for the new polygon using the needed fineness.

FIG.4

EP 0 378 754 A2

## POLYGON SMOOTHING METHOD

### Technical Field

This invention relates to a method of smoothing polygons and, more particularly, to software which smooths polygons by dividing them into multiple segments and then smooths each such segment.

### Background Art

Computer graphics are made up in large part of polygons. A polygon is a figure consisting of straight lines joined end to end. The joinder of two lines is called a vertex. A closed polygon is a polygon wherein the ends of the lines all join and form a "closed" loop. The vertices of a closed polygon may also be referred to as closed. An example of a closed polygon is a pentagon. An open polygon is a polygon wherein the lines do not join to form a closed loop but have two "open" ends. An example of an open polygon is a "V". The beginning and ending points of an open polygon may be referred to herein as vertices or open vertices.

Because computer graphics images consist in large part of various polygons, the images often have an unwanted rough or stepping surface. For example, a computer graphics user may desire to produce an image of an automobile with a curved body shape. Because computer graphics print by using polygons, the car body would consist of straight lines joined together. Joining the lines together creates a rough or stepping surface rather than the smooth curve desired. Accordingly, methods have been developed to smooth such polygons.

Smoothing a polygon means to modify the rough or stepping surface of the same so that a smooth curve appears to be produced. Such smoothing has been performed in the past by employing an algorithm commonly known as the Bezier cubic curve algorithm. One application of the Bezier algorithm to computer graphics images is discussed in the Postscript Language Reference Manual by Adobe Systems, Inc., copyright 1985.

The invented method smooths polygons by using the Bezier algorithm in conjunction with a feature which determines the degree of smoothness or "fineness" required by a graphics image, and then prints the result. By determining the fineness required, the invented method maximizes graphics images quality while minimizing the time and computer memory required to smooth an image.

### Disclosure of the Invention

The invented polygon smoothing method includes software which describes a polygon as another polygon with many more vertices than the original. The new polygon is constructed by determining the fineness required to gain acceptable quality in output and printing the Bezier cubic curve for the new polygon using the needed fineness.

### Brief Description of the Drawing

Figure 1 shows an unsmoothed computer-produced graphics image.

Figure 2 shows a computer-produced graphics image smoothed according to the invented method.

Figure 3 is a block diagram of the invented polygon smoothing method.

Figure 4 is a detailed block diagram of the invented method.

### Detailed Description and Best Mode for Carrying Out the Invention

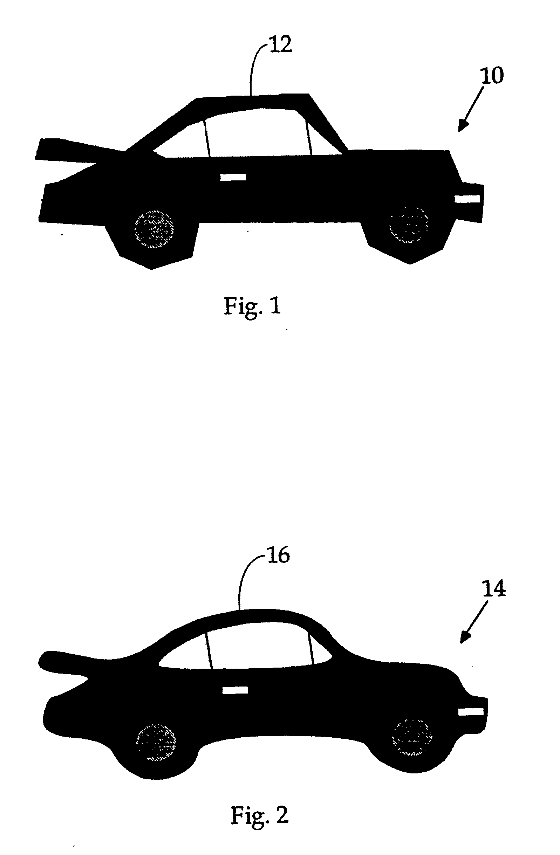

Figure 1 shows at 10 a computer-produced graphics image of an automobile. The image may also be called a closed polygon. Outer surface 12 of the image is rough and shows the lines joined to produce the polygon.

Figure 2 shows at 14 the same graphics image produced by a computer system using the invented polygon smoothing method. Outer surface 16 is also made of lines joined together, however, the lines have been "smoothed" to produce the fineness required to obtain the desired quality.

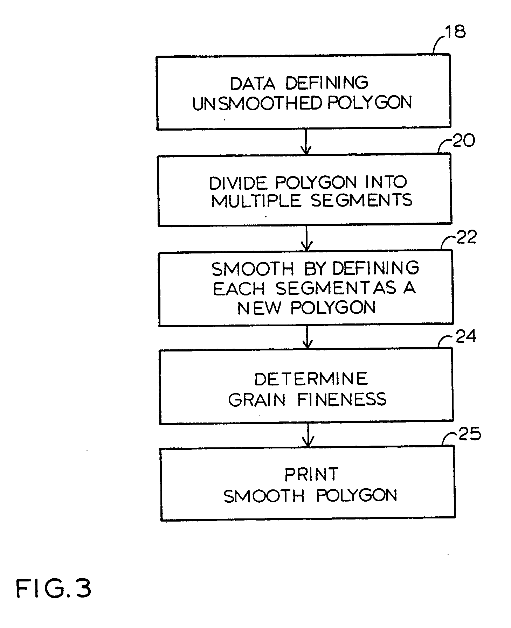

Figure 3 is a block diagram showing the invented polygon smoothing method. Initially, at step 18, the data defining the unsmoothed polygon is collected and the polygon is divided into multiple segments, as shown by block 20. A polygon segment is the part of the polygon defined by a predetermined number of vertices. For example, in the preferred embodiment, each set of three successive vertices constitutes a polygon segment. As is evident by that definition, polygon segments may overlap.

The method then smooths each segment, as shown in step 22, by defining the same as a new polygon with an increased number of vertices. The new polygons are then joined to produce a "smooth" polygon. The lines forming the smooth polygon are shorter, and therefore the rough, outer surface is less pronounced.

The fineness required to achieve acceptable quality in output is determined for the new polygon at step 24. Such fineness is often referred to as the "grain", or "grain fineness", because the degree of fineness dictates how "grainy" the printed image will be. The grain fineness is simply a division of the lines forming the smooth polygon into numerous shorter lines so that acceptable quality is achieved. The fineness dictates how many shorter lines the smooth polygon should be divided into. Experimentation has shown that dividing each line of the smooth polygon by 4/300ths-of-an-inch, rounding up to the nearest whole number, and then printing the lines of the smooth polygon with the determined grain fineness results in acceptable quality in output. In this instance, 4/300ths-of-an-inch may be referred to as four pixels, where the image is printed at 300-pixels-per-inch. As can be seen, the shorter the lines, the smaller the grain fineness. Thus, the invented method determines a different fineness for each line, thereby using a greater fineness only where needed.

The smooth polygon is then printed using the determined grain fineness, as shown in block 25.

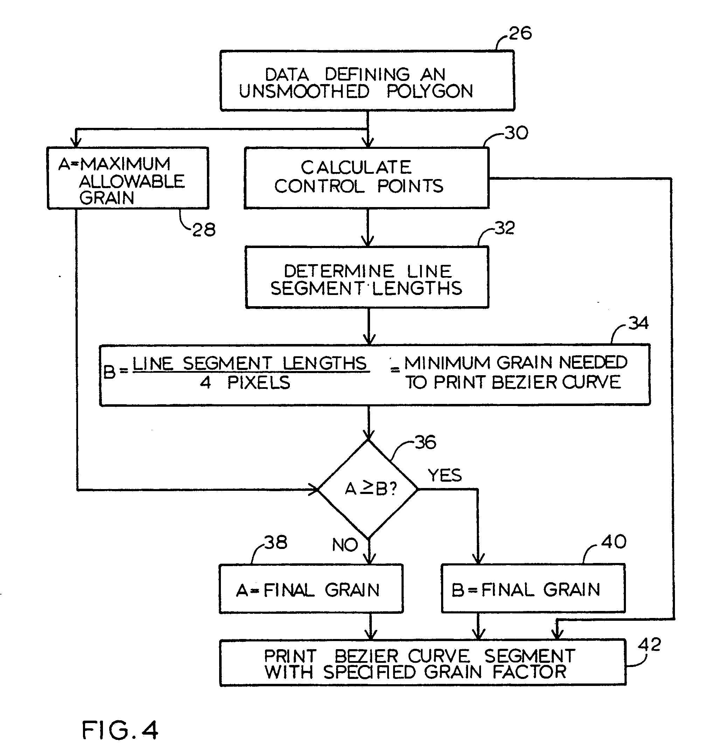

Figure 4 is a detailed block diagram of the invented polygon smoothing method. The data defining the unsmoothed polygon is initially collected as shown by block 26.

Each system employing the invented method will have system limitations such as available memory. For example, a computer system may have thirty-two thousand bytes of available memory in which a polygon may be described. The memory constraint limits the degree to which a polygon may be smoothed by limiting the number of line segments the unsmoothed polygon may be divided into. Accordingly, step 28 recognizes the maximum grain fineness allowable by the system, or, in other words, the maximum number of divisions of each line segment. Again, this limit is a function of memory.

Step 30 divides the unsmoothed polygon into multiple segments by calculating the Bezier control points for each segmental set of three vertices of the unsmoothed polygon. Specifically, the invented method recognizes the first three such vertices, $P_0$, $P_1$ and $P_2$, of the unsmoothed polygon.

The control points of the Bezier curve may be identified as $X_0$, $X_1$, $X_2$ and $X_3$. The control points for sets of closed vertices are calculated according to the following equations:

$$X_0 = \frac{P_0+P_1}{2}$$

$$X_1 = \frac{1}{6} P_0 + \frac{5}{6} P_1$$
$$X_2 = \frac{5}{6} P_1 + \frac{1}{6} P_2$$

$$X_3 = \frac{P_1+P_2}{2}$$

For sets of vertices having both open and closed vertices, and the first vertex $P_0$ is open, the control points are calculated according to the following equations:
$$X_0 = P_0$$
$$X_1 = \frac{1}{3} P_0 + \frac{2}{3} P_1$$
$$X_2 = \frac{5}{6} P_1 + \frac{1}{6} P_2$$

$$X_3 = \frac{P_1+P_2}{2}$$

For sets of vertices having both open and closed vertices, and the first vertex $P_0$ is closed, the control points are calculated as follows:

$$X_0 = \frac{P_0+P_1}{2}$$

$$X_1 = \frac{1}{6} P_0 + \frac{5}{6} P_1$$
$$X_2 = \frac{2}{3} P_1 + \frac{1}{3} P_2$$
$$X_3 = P_2$$

The control points for a set of three vertices beginning and ending with open vertices are calculated according to the following equations:
$$X_0 = P_0$$
$$X_1 = \frac{1}{3} P_0 + \frac{2}{3} P_1$$
$$X_2 = \frac{2}{3} P_1 + \frac{1}{3} P_2$$
$$X_3 = P_2$$

These control points represent coordinates on an X axis. Similarly, coordinates for a Y axis may be obtained by using the same equations -- substituting a Y for each X.

The control points are calculated for each set of three vertices of the unsmoothed polygon, stored in memory, and used to calculate the Bezier curve. For each set of three vertices, $P_0$, $P_1$ and $P_2$, four control points are calculated. The first control point for the next set of three vertices, $P_1$, $P_2$ and $P_3$, is the last control point for the prior set. Thus, the control points do not overlap.

Calculation of the control points also divides the unsmoothed polygon into multiple line segments. The lines between successive control points constitute such segments. Step 32 then determines the length of each such segment. In the preferred embodiment, the lengths are measured in pixels at 300-pixels-per-inch.

Step 34 determines the minimum grain fineness needed to print the Bezier curve, defined by the control points, with the required smoothness. The minimum grain fineness is calculated by dividing each line segment length by a predetermined resolution number. In the preferred embodiment, the line segment lengths are divided by four pixels, where there are 300-pixels-per-inch. The resulting quotient is rounded up to the nearest whole number, and such number constitutes the minimum grain fineness needed. Again, the grain fineness is simply a division of the line segments into numerous shorter lines, so that when printed, acceptable quality results. The shorter the line segment, the smaller the grain fineness. This is done to limit the memory needed to describe shorter line segments.

The invented method next determines whether the minimum grain fineness needed is less than or equal to the maximum allowable grain fineness, as shown in step 36. If the minimum grain fineness needed is greater than the maximum allowable grain fineness, the system cannot print the polygon with the minimum grain, and therefore the final grain fineness chosen is the maximum allowable grain fineness, as shown in step 38. If the minimum grain fineness needed is less than or equal to the maximum allowable grain fineness, then the system is capable of using the minimum grain fineness as the final grain, as shown in block 40.

Step 42 then prints the Bezier curve segment with the final grain. The Bezier curve segment is the part of the curve defined by the Bezier algorithm for each set of three vertices. The calculated control points are used in the following three equations to calculate the X-axis constants $A_x$, $B_x$ and $C_x$, and the corresponding Y-axis constants $A_y$, $B_y$ and $C_y$ (not shown):

$$X_1 = X_0 + \frac{C_x}{3}$$

$$X_2 = X_1 + \frac{(C_x + B_x)}{3}$$

$X_3 = X_0 + C_x + B_x + A_x$

The constants are then used in the following Bezier curve equations to plot the Bezier curve, where t is a unitless number defining the distance between which the curve is to expand, for example, $0 \leq t \leq 1$:

$X_t = A_x t^3 + B_x t^2 + C_x t + X_0$
$Y_t = A_y t^3 + B_y t^2 + C_y t + Y_0$

In short, the invented method calculates the control points for each set of three vertices of an unsmoothed polygon. The control points are stored in memory, and are used to calculate the Bezier curve for the entire unsmoothed polygon. The method also determines the grain fineness needed to print the smoothed polygon so that it has acceptable quality in output. When the Bezier curve and the minimum grain fineness needed have both been calculated, the method prints the entire smoothed polygon.

Industrial Applicability

The invented method is applicable to systems which print computer graphics images. This method smooths such images to obtain a high quality output while speeding up processing so that time is conserved.

While the preferred embodiment or best mode of the invention has been described herein, variations and changes may be made without departing from the spirit of the invention.

**Claims**

1. A method for smoothing polygons comprising:
dividing (20) a polygon into multiple segments;
smoothing (22) the first segment of the polygon by defining it as a new polygon;
determining (24) the grain fineness required to gain acceptable quality in output for the first such segment;
repeating the smoothing and determining steps with each polygon segment; and
printing (25) the smooth polygon.

2. A method used by a printing system to smooth and print polygons having vertices comprising:
receiving (26) data defining the polygon to be smoothed;
calculating (28) the maximum grain fineness allowed by the system;
calculating (30) the control points of the Bezier curve for each set of three vertices of the polygon;
determining (32) the length of the line segments between the calculated control points;
using the determined line segment lengths to calculate (34) the minimum grain fineness needed to print the Bezier curve defined by the calculated control points;
choosing (36) as the final grain fineness the smaller of the maximum grain fineness allowed and the minimum grain fineness needed; and

printing (42) the Bezier curve corresponding to the calculated control points with the final grain fineness.

3. The method of claim 2, wherein the step of determining the length of the line segments between the calculated control points comprises counting the number of pixels between the calculated control points.

4. The method of claim 3, wherein the step of using the determined line segment lengths to calculate (34) the minimum grain fineness needed comprises dividing the line segment lengths by four pixels and rounding up to the nearest whole number.

Fig. 1

Fig. 2

18

DATA DEFINING
UNSMOOTHED POLYGON

20

DIVIDE POLYGON INTO
MULTIPLE SEGMENTS

22

SMOOTH BY DEFINING
EACH SEGMENT AS A
NEW POLYGON

24

DETERMINE
GRAIN FINENESS

25

PRINT
SMOOTH POLYGON

FIG.3

```
                                                           ⌐26
              ┌──────────────────────────────┐
              │     DATA  DEFINING  AN        │
              │  UNSMOOTHED  POLYGON          │
              └──────────────────────────────┘
                                                           ⌐30
┌─────────────────┐       ┌──────────────────────────────┐
│ A=MAXIMUM       │       │      CALCULATE               │
│ ALLOWABLE       │       │  CONTROL  POINTS             │
│ GRAIN           │       └──────────────────────────────┘
└─────────────────┘
           ⌐28                                             ⌐32
                          ┌──────────────────────────────┐
                          │   DETERMINE  LINE            │
                          │  SEGMENT LENGTHS             │
                          └──────────────────────────────┘
                                                                    ⌐34
┌──────────────────────────────────────────────────────────────────────┐
│      LINE SEGMENT LENGTHS                                              │
│ B = ─────────────────────── = MINIMUM GRAIN NEEDED                    │
│          4  PIXELS            TO PRINT BEZIER CURVE                    │
└──────────────────────────────────────────────────────────────────────┘
                                       ⌐36
                              ◇ A ≥ B? ◇        YES
                                 NO
        ⌐38                                        ⌐40
┌──────────────────────┐         ┌──────────────────────┐
│ A = FINAL GRAIN      │         │ B = FINAL GRAIN      │
└──────────────────────┘         └──────────────────────┘

┌──────────────────────────────────────────────────────────┐   ⌐42
│   PRINT  BEZIER  CURVE  SEGMENT                           │
│  WITH SPECIFIED GRAIN FACTOR                              │
└──────────────────────────────────────────────────────────┘
```

$$B = \frac{\text{LINE SEGMENT LENGTHS}}{4 \text{ PIXELS}} = \text{MINIMUM GRAIN NEEDED TO PRINT BEZIER CURVE}$$

FIG. 4